# EUROPEAN PATENT APPLICATION

(11) **EP 4 822 262 A1**
(43) Date of publication of application: **14.10.2026**
(21) Application number: 26171258.2
(22) Date of filing: 08.04.2026
(51) Int. Cl.: F24F 5/00, F24F 11/88, F24F 11/32, F24F 11/64, F24F 11/89, H02J 3/32, F24F 11/36, F24F 11/77

(54) **SAFETY PROCESS FOR ENERGY STORAGE DEVICE IN AIR CONDITIONING SYSTEM**

(30) Priority: 09.04.2025 US 202563785850 P
(71) Applicant: Carrier Corporation, Palm Beach Gardens, FL 33418 (US); Viessmann Holding International GmbH, 35108 Allendorf (Eder) (DE)
(72) Inventor: WANG, Ligong, East Syracuse, NY 13057 (US); ROTHERT, Martin, 34266 dNiestetal (DE)
(74) Representative: Dehns

(57) **Abstract**

An air conditioning system (100) includes a first unit (200) including a compressor (242); a controller (220); an energy storage device (240) configured to power the compressor (242); wherein the controller (220) is configured to execute a safety process to initiate discharging the energy storage device (240) under certain conditions.

## Description

### BACKGROUND

The embodiments described herein relate to air conditioning systems.

Air conditioning systems (e.g., heating, cooling, ventilation, humidity control, etc.) are typically electrically powered. The use of energy storages systems, such as batteries or capacitors, in air conditioning systems has been proposed. For example, published international application number WO2024263731, in the name of Carrier Corporation, describes self-powered air conditioning systems including an energy storage device. Energy storages systems, such as batteries, may benefit from safety measures when operating in harsh conditions.

### SUMMARY

According to a first aspect of the invention there is provided an air conditioning system, the air conditioning system includes a first unit including a compressor; a controller; an energy storage device configured to power the compressor; wherein the controller is configured to execute a safety process to initiate discharging the energy storage device under certain conditions
Optionally, the controller is configured to detect an unsafe condition at the energy storage device.

Optionally, in response to detecting the unsafe condition at the energy storage device, the controller detects if flooding is present at the first unit.

Optionally, in response to detecting flooding at the first unit, the controller is configured to verify flooding at the first unit with a remote system.

Optionally, in response to verifying flooding at the first unit with the remote system, the controller initiates discharging of the energy storage device.

Optionally, in response to detecting the unsafe condition at the energy storage device, the controller detects if fire is present at the first unit.

Optionally, in response to detecting fire at the first unit, the controller is configured to verify fire at the first unit with at least one of a thermostat, a thermocouple and a thermistor.

Optionally, in response to verifying fire at the first unit, the controller initiates discharging of the energy storage device.

Optionally, discharging the energy storage device comprises at least one of powering a heater using the energy storage device, powering a fan using the energy storage device, powering the compressor using the energy storage device or sending power from the energy storage device to an AC power grid.

Optionally, the controller is configured to discharge the energy storage device until a state of charge of the energy storage device is below a threshold.

Optionally, the controller is configured to disable the energy storage device upon determining it is not safe to operate the energy storage device.

According to a second aspect of the invention there is provided a method of operating an air conditioning system having a first unit including a compressor, a controller and an energy storage device configured to power the compressor, the method including executing a safety process to initiate discharging the energy storage device under certain conditions.

Optionally, the method may include detecting an unsafe condition at the energy storage device.

Optionally, wherein in response to detecting the unsafe condition at the energy storage device, detecting if flooding is present at the first unit.

Optionally, wherein in response to detecting flooding at the first unit, verifying flooding at the first unit with a remote system.

Optionally, wherein in response to verifying flooding at the first unit with the remote system, initiating discharging of the energy storage device.

Optionally, wherein in response to detecting the unsafe condition at the energy storage device, detecting if fire is present at the first unit.

Optionally, wherein in response to detecting fire at the first unit, verifying fire at the first unit with at least one of a thermostat, a thermocouple and a thermistor.

Optionally, wherein in response to verifying fire at the first unit, initiating discharging of the energy storage device.

Optionally, wherein discharging the energy storage device comprises at least one of powering a heater using the energy storage device, powering a fan using the energy storage device, powering the compressor using the energy storage device or sending power from the energy storage device to an AC power grid.

Optionally, the method may include discharging the energy storage device until a state of charge of the energy storage device is below a threshold.

Optionally, the method may include disabling the energy storage device upon determining it is not safe to operate the energy storage device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a system.
FIG. 2 depicts a controller.
FIG. 3 depicts an electrical architecture.
FIG. 4 depicts a top discharge first unit with an integrated energy storage device.
FIG. 5 depicts a safety process for the energy storage device.

### DETAILED DESCRIPTION

Embodiments described herein relate to air conditioning systems that include electrical energy storage system(s) (e.g., batteries, capacitors, supercapacitors) to provide power in addition to, or in place of, an electrical power grid. The entire contents of published international application number WO2024263731 are incorporated herein by reference.

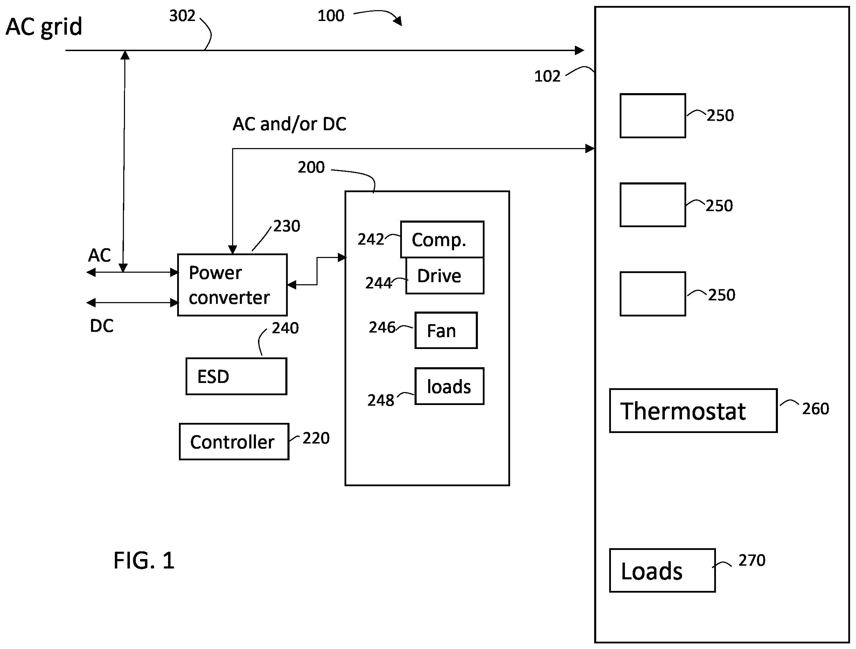

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 may be a variable refrigerant flow (VRF) system that employs a single first unit 200 (e.g., outdoors) and a plurality of second units 250 (e.g., indoors) to provide air conditioning (e.g., heating and/or cooling, etc.) to various indoor zones, with the ability to adjust the refrigerant flow to each zone based on individual temperature needs.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the disclosure.

The controller 220 may communicate with an air conditioning system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid 302, powered solely by the energy storage device 240, and powered by both the AC power grid 302 and the energy storage device 240, in conjunction. The one or more components of the air conditioning system include components in the first unit 200 and components in the second unit 250.

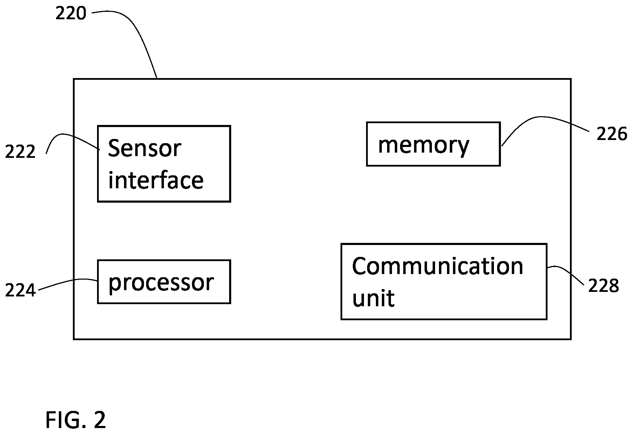

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid 302 directly. The controller 220 may choose whether the power will come from the AC power grid 302 or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, capacitors, supercapacitors, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an energy storage device management system (ESDMS)) that are electrically coupled to the energy storage device 240 and may be adapted to communicate directly or through the ESDMS to the controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system, and allows the user to enter operational modes of the air conditioning system, enter setpoints for various zones of the air conditioning system, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

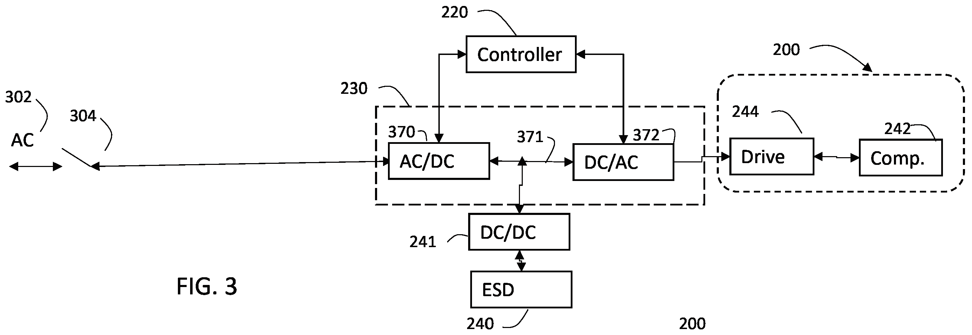

FIG. 3 depicts an electrical architecture for a first unit 200 in an example embodiment. The location of components in FIG. 3 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. As shown in Figure 3, AC power from an AC power grid 302 is supplied through a grid disconnect 304 to a power converter 230. The power converter 230 includes an AC/DC converter 370 and a DC/AC converter 372. The output of the DC/AC converter 372 is provided to the compressor 242, through a compressor drive 244. If the compressor 242 is fixed speed, the compressor drive 244 may be a switch, such as a contactor or relay. If the compressor 242 is variable speed, the compressor drive 244 may be a variable frequency drive (VFD) configured to provide the proper drive signals to the compressor 242 under control of the controller 220. The power converter 230 and the drive 244 may be part of a common assembly.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, the energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 3 allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads can be powered exclusively by the AC power grid 302, exclusively by the energy storage device 240, or powered by both the energy storage device 240 and the AC power grid 302.

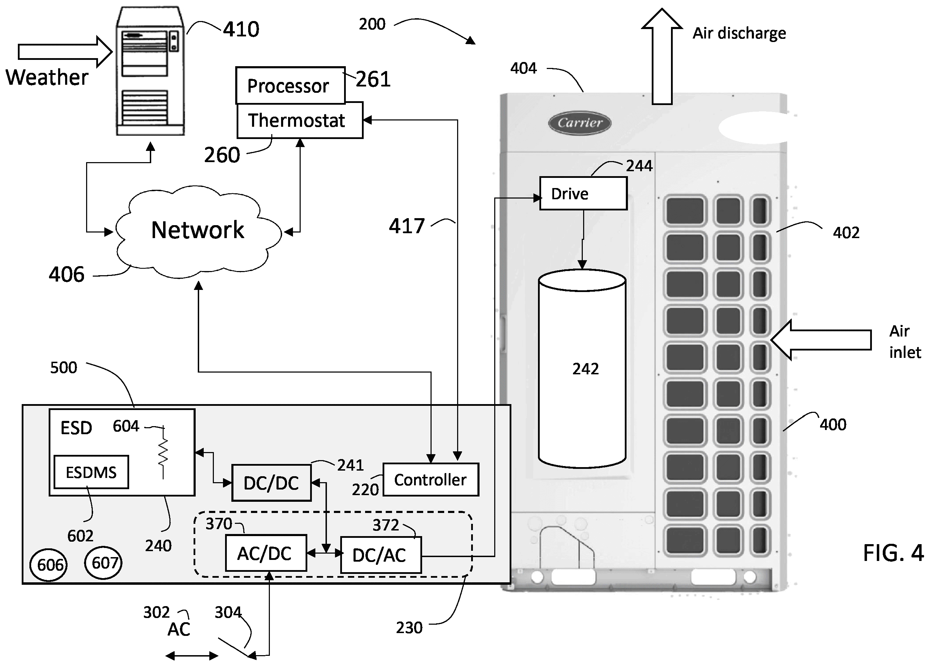

FIG. 4 depicts a physical layout of a first unit 200 in an embodiment. FIG. 4 depicts a top discharge first unit 200 (e.g., an outdoor unit) with an integrated energy storage device 240 in an example embodiment. In other embodiments, the first unit 200 is a side discharge unit. The first unit 200 includes a housing 400 that includes typical components of an air conditioning system including the compressor 242, drive 244, fan(s) (not shown), heat exchanger(s) (not shown), expansion device (not shown), etc. The first unit 200 is a top discharge unit, meaning outside air is drawn into the first unit 200 through a side air inlet 402 and air is discharged from the first unit 200 through one or more top air outlet(s) 404.

An enclosure 500 containing the energy storage device 240 may be positioned in multiple location. In an example embodiment, the enclosure 500 is positioned on the side of the housing 400 and external to the first unit 200. In another example embodiment, the enclosure 500 is positioned on inside the housing 400 and at the bottom of the housing 400. The enclosure 500 includes the energy storage device 240, optional DC-DC converter 241, the power converter 230 and the controller 220. The enclosure 500 may include other components not shown for ease of illustration. The enclosure 500 may be a weatherproof enclosure designed to protect electronic components from environmental factors such as moisture, dust, temperature fluctuations, and physical damage. The enclosure 500 may include gaskets or seals around the edges of doors and panels to prevent the ingress of water and dust. These seals may be made from rubber or silicone to ensure a tight fit. To manage heat dissipation, the enclosure 500 may include vents or louvers that allow for airflow while still preventing the entry of water and debris. The enclosure 500 may include filters to maintain clean airflow through the enclosure.

The energy storage device 240 may have a preferred operating temperature range. Excessively high or low temperatures can negatively affect the performance of the energy storage device 240. The energy storage device 240 includes an energy storage device management system (ESDMS) 602, which may be implemented using a processor and one or more current or voltage sensors that monitor the battery in the energy storage device 240. The ESDMS 602, also referred to as a battery management system or BMS, manages the energy storage device 240, ensuring safe and efficient operation by monitoring and controlling parameters like voltage, current, temperature, and state of charge, and protecting against overcharging, over-discharging, and other hazards. An electric heater 604 is in, or proximate to, the energy storage device 240 to heat the energy storage device 240 when needed. The heater 604 is operated by the ESDMS 602.

A water sensor 606 may be installed in the enclosure 500 to detect flooding around the first unit 200. The water sensor 606 is in communication with the controller 220, through wired or wireless communications. A temperature sensor 607 may be used to measure temperature inside or outside of the enclosure 500. The temperature sensor 607 is in communication with the controller 220, through wired or wireless communications.

FIG. 4 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or ESDMS 602. The controller 220 communicates with the thermostat 260 over a local link 417. The local link 417 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, weather information, and/or alarm information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

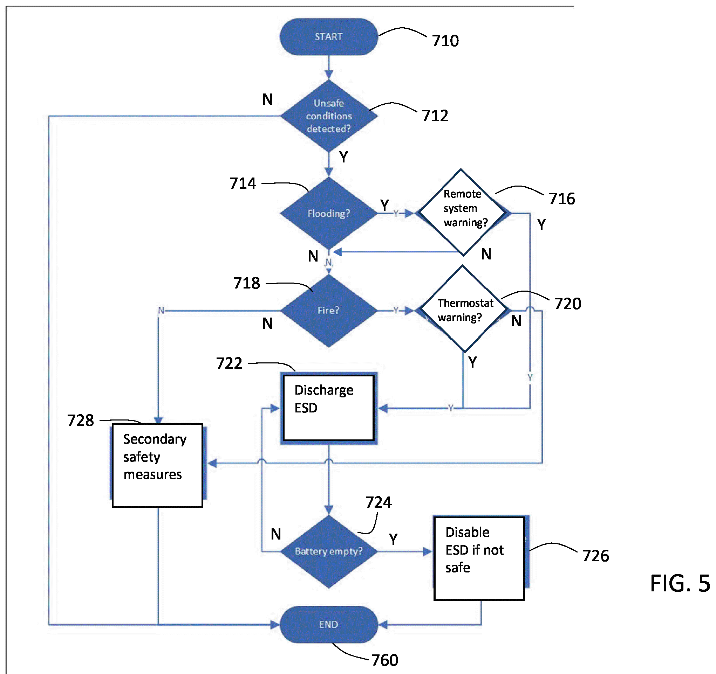

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 and/or thermostat 260 provide information that is used by the controller 220 to implement an energy storage device 240 safety process described herein with reference to FIG. 5. The information provided by the remote system 410 may include weather information, which may be current weather and/or predicted weather conditions at the location of the first unit 200. The information provided by the thermostat 260 may include current or predicted weather information, indoor temperature, ambient temperature, fire alarm status, etc.

The thermostat 260 may be equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat 260 may perform all or some of the operations of FIG. 5, in conjunction or individually.

FIG. 5 depicts a safety process for the energy storage device 240 in an example embodiment. Some batteries (e.g., lithium-ion batteries) are subject to thermal runaway in case of unsafe conditions like flooding or wildfire. As such, a safety process is implemented to reduce a likelihood of thermal runaway or other event. The safety process may be implemented by the controller 220 and/or the thermostat 260, although FIG. 5 is described with the controller 220 performing the safety process.

The process starts at 710, which may be initiated based on an event (e.g., a request for power from the energy storage device 240) or periodically (e.g., every 10 minutes). The process flows to 712 where the controller 220 detects if an unsafe condition is present. The unsafe condition may be detected based on parameters of the energy storage device 240 such as near-short circuits, reduced impedance, abnormal A/C signals, over voltage, under voltage, over current, under current, state of charge (SoC), state of health (SoH), high temperature , presence of water or flooding, etc. These parameters may be communicated from the ESDMS 602 to the controller 220.

If no unsafe condition is detected at 712, the process flows to 760 and ends until the next event or time window. If an unsafe condition is detected at 712, the process flows to 714 where the controller 220 determines if there is flooding at the first unit 200. The presence of flooding may be determined based on the water sensor 606 detecting the presence of water, detecting a change in internal resistance in the energy storage device 240 and/or detecting a change in impedance in the energy storage device 240. If flooding is detected at 714, the process flows to 716 where the controller 220 verifies the presence of flooding with the remote system 410. At 716, the controller 220 determines if the remote system 410 has issued a flood warning for the location of the first unit 200. If not, the process flows to 718.

At 718 the controller 220 determines if there is a fire at or near the first unit 200. The presence of fire may be determined based on the temperature sensor 607 detecting a temperature at the first unit 200 great than a threshold (e.g., 65 degrees C). If a fire is detected at 718, the process flows to 720 where the controller 220 verifies the presence of a fire with the thermostat 260, and/or a thermocouple and/or a thermistor. At 720, the controller 220 determines if a device has issued a fire warning. If not, the process flows to 728.

If at 716 flooding is confirmed or if at 720 a fire is confirmed, the process flows to 722. At 722, the controller 220 initiates discharging of the energy storage device 240. The energy storage device 240 may be discharged by operating the heater 604 powered by the energy storage device 240. The energy storage device 240 may be discharged by powering the fan 246 of the first unit 200 using the energy storage device 240. The energy storage device 240 may be discharged by powering the compressor 242 of the first unit 200 using the energy storage device 240. The energy storage device 240 may be discharged by sending power to the AC power grid 302 through the DC/DC converter 241 and the bi-directional AC/DC converter 370. One or more of the discharging operations may occur simultaneously.

At 724, the controller 220 determines if the energy storage device 240 is sufficiently discharged. The controller 220 may determine that the energy storage device 240 is sufficiently discharged when the state of charge (SoC) of the sufficiently discharged is below a threshold, which may be a voltage or a percentage (e.g., less than 3% of maximum charge).

The process loops between steps 724 and 722 until the energy storage device 240 is discharged. When the energy storage device 240 is discharged, flow proceeds to 726 where the energy storage device 240 is disabled if it is not safe to operate the energy storage device 240. At 726, the controller 220 may determine that the energy storage device 240 is not safe to for operation, for example, if water is detected inside the energy storage device 240 or the energy storage device 240 is experiencing extreme high temperatures (e.g., above 70°C). The energy storage device 240 may be disabled by activating a fuse or relay that disconnects the energy storage device 240 from other components in the first unit 200. The energy storage device 240 may be disabled by the ESDMS 602 ceasing communication with the controller 220, to prevent the energy storage device 240 from being used to power components in the first unit 200. From 726, the process flows to 760.

If no flooding is detected at 714 and no fire is detected at 718, flow proceeds to 728. Also, if flooding is not verified at 716 and a fire is not verified at 720, flow proceeds to 728. At 728, secondary safety measures are implemented. Secondary safety measure may be employed in the event of a fire alarm (e.g., reported from the remote system 410 and/or the thermostat 260) and/or high temperature near the energy storage device 240 (e.g., reported from the temperature sensor 607, the remote system 410 and/or the thermostat 260). From 728, the process flows to 760.

Embodiments provide a safety process to discharge the energy storage device 240 through proper loads, such as a heater 604, a fan 246, a compressor 242 and/or an AC power grid 302. This safety process reduces risks of thermal runaway (e.g., of lithium-ion batteries) due to unsafe conditions like flooding or fire.

As described above, embodiments can be in the form of processor-implemented processes and devices for practicing those processes, such as a controller 220 and/or the thermostat 260. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, sub-combinations, or equivalent arrangements not heretofore described, but which are commensurate with the scope of the present invention as defined by the appended claims. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

## Claims

1. An air conditioning system (100) comprising:
a first unit (200) including a compressor (242);
a controller (220);
an energy storage device (240) configured to power the compressor;
wherein the controller is configured to execute a safety process to initiate discharging the energy storage device under certain conditions.

2. The air conditioning system of claim 1, wherein controller is configured to detect an unsafe condition at the energy storage device.

3. The air conditioning system of claim 2, wherein in response to detecting the unsafe condition at the energy storage device, the controller is configured to detect if flooding is present at the first unit.

4. The air conditioning system of claim 3, wherein in response to detecting flooding at the first unit, the controller is configured to verify flooding at the first unit with a remote system, and optionally
wherein in response to verifying flooding at the first unit with the remote system, the controller is configured to initiate discharging of the energy storage device.

5. The air conditioning system according to any of claims 2 to 4, wherein in response to detecting the unsafe condition at the energy storage device, the controller is configured to detect if fire is present at the first unit.

6. The air conditioning system of claim 5, wherein in response to detecting fire at the first unit, the controller is configured to verify fire at the first unit with at least one of a thermostat (260), a thermocouple and a thermistor, and optionally
wherein in response to verifying fire at the first unit, the controller is configured to initiate discharging of the energy storage device.

7. The air conditioning system of any preceding claim, wherein discharging the energy storage device comprises at least one of powering a heater (604) using the energy storage device, powering a fan (246) using the energy storage device, powering the compressor using the energy storage device or sending power from the energy storage device to an AC power grid (302).

8. The air conditioning system of any preceding claim, wherein controller is configured to discharge the energy storage device until a state of charge of the energy storage device is below a threshold, and/or
wherein controller is configured to disable the energy storage device upon determining it is not safe to operate the energy storage device.

9. A method of operating an air conditioning system (100) having a first unit including a compressor (242), a controller (220) and an energy storage device (240) configured to power the compressor, the method comprising:
executing a safety process to initiate discharging the energy storage device under certain conditions.

10. The method of claim 9, further comprising detecting an unsafe condition at the energy storage device.

11. The method of claim 11, wherein in response to detecting the unsafe condition at the energy storage device, detecting if flooding is present at the first unit, and optionally
wherein in response to detecting flooding at the first unit, verifying flooding at the first unit with a remote system (410), and optionally
wherein in response to verifying flooding at the first unit with the remote system, initiating discharging of the energy storage device.

12. The method of claims 10 or 11, wherein in response to detecting the unsafe condition at the energy storage device, detecting if fire is present at the first unit, and optionally
wherein in response to detecting fire at the first unit, verifying fire at the first unit with at least one of a thermostat (260), a thermocouple and a thermistor, and optionally
wherein in response to verifying fire at the first unit, initiating discharging of the energy storage device.

13. The method of any of claims 9 to 12, wherein discharging the energy storage device comprises at least one of powering a heater (604) using the energy storage device, powering a fan (246) using the energy storage device, powering the compressor using the energy storage device or sending power from the energy storage device to an AC power grid (302).

14. The method according to any of claims 9 to 13, further comprising discharging the energy storage device until a state of charge of the energy storage device is below a threshold.

15. The method according to any of claims 9 to 14, further comprising disabling the energy storage device upon determining it is not safe to operate the energy storage device.
